# EUROPEAN PATENT SPECIFICATION

(11) **EP 3 330 099 B1**
(45) Date of publication and mention of the grant of the patent: **17.06.2020**
(21) Application number: 16832976.1
(22) Date of filing: 29.07.2016
(51) Int. Cl.: B60B 35/18, B60B 35/14, B60K 7/00, F16C 19/18, F16C 41/00, H02K 7/08, H02K 7/18, F16C 33/60

(54) **WHEEL BEARING DEVICE WITH GENERATOR**
RADLAGERVORRICHTUNG MIT GENERATOR
DISPOSITIF DE ROULEMENT DE ROUE AVEC GÉNÉRATEUR

(30) Priority: 31.07.2015 JP 2015151602
(43) Date of publication of application: 06.06.2018
(60) Divisional application: 20172311.1
(73) Proprietor: NTN Corporation, Osaka-shi, Osaka 550-0003 (JP)
(72) Inventor: KURITA, Masao, Iwata-shi Shizuoka 438-8510 (JP)
(74) Representative: Cohausz & Florack
(86) International application number: PCT/JP2016/072450
(87) International publication number: WO 2017/022697

(56) References cited:
- EP-A1- 1 719 656
- JP-A- 2003 287 046
- JP-A- 2003 287 046
- JP-A- 2004 135 471
- JP-A- 2004 224 069
- JP-A- 2005 178 663
- JP-A- 2013 035 338

## Description

### Field of the Invention

The present invention relates to a wheel bearing apparatus for rotationally supporting a wheel of a vehicle, and more particularly to a wheel bearing apparatus with a generator which is formed by uniting a bearing part and a generator with assembling a stator constituting the generator to a bearing part.

### Description of Background Art

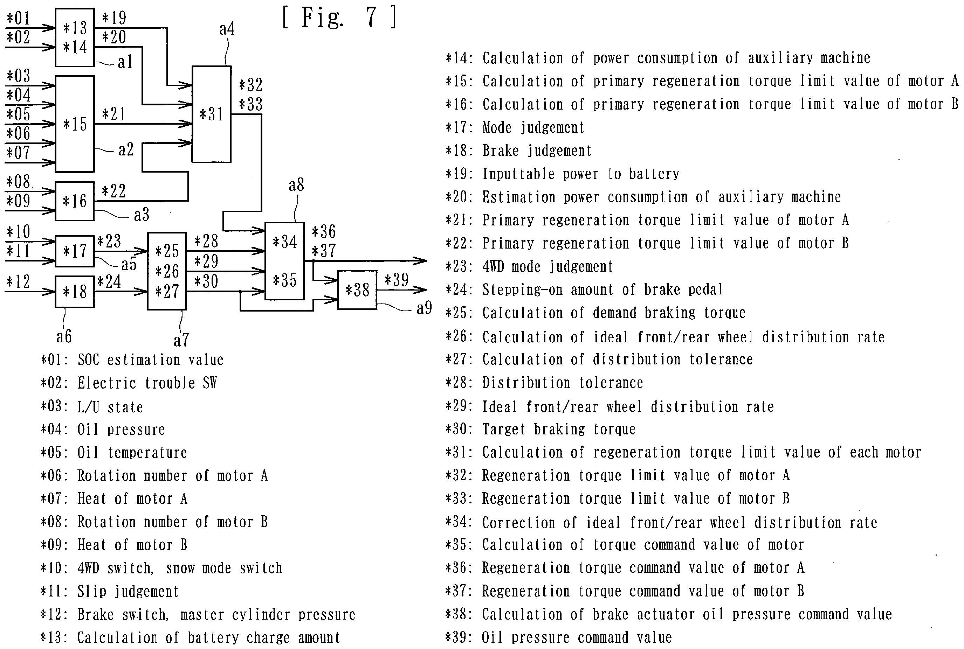

In recent years, a battery has been used in a vehicle as a power source which is supplied with electric energy generated by an alternator driven by an engine. In addition, hybrid vehicles or plug-in hybrid vehicles using both engines and electric motors as power sources have been noticed in view of fuel reduction and exhaust gas purification. For example as shown in Fig. 7, an invention enabling the 4-wheel drive has been known in which an engine and a generator are connected to a pair of front wheels and an electric motor is connected to a pair of rear wheels and driven by electric power regenerated by the generator.

In the invention of the prior art, it is calculated an ideal front/rear wheel distribution rate of a front wheel braking torque and a rear wheel braking torque as well as a distribution rate tolerance relative to the ideal front/rear wheel distribution rate (a7). It is also calculated a torque command value to each motor-generator based on obtained front/rear wheel distribution rate by correcting the ideal front/rear wheel distribution rate so as to increase the generation efficiency of a first motor-generator ("motor A") to be connected to the rear wheel and a second motor-generator ("motor B") to be connected to the front wheel within a range of the distribution tolerance (a8). Thus, it is possible to efficiently obtain the regeneration power without losing the balance of the front wheel braking torque and the rear wheel braking torque during the regeneration braking applying the braking torque by performing regeneration drive of the motor-generator in accordance with the speed reduction demand (see e.g. Patent Document 1 below).

In usual, auxiliary machines such as the alternator etc. are arranged in an engine compartment similarly to the engine and many other auxiliary parts than the alternator such as pipes, wire harness etc. are also arranged in the engine compartment and accordingly a space within the engine compartment is complicated.

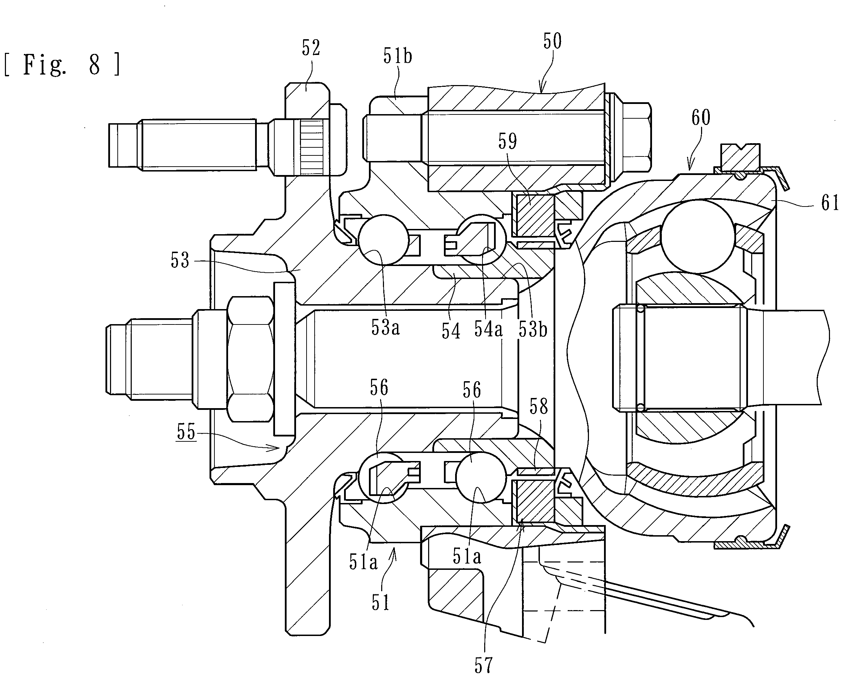

For example, a structure shown in Fig. 8 is known in which a generator is arranged in a space out of the engine compartment to solve a problem of excessive density of space in the engine compartment and to give a room in space design. This wheel bearing apparatus is provided with a generator structure able to be arranged in a space out of the engine compartment. This wheel bearing apparatus with a generator comprises an outer member 51 formed on its outer circumference with a body mounting flange 51b to be mounted on a knuckle 50 of a vehicle and on its inner circumference with double row outer raceway surfaces 51a, 51a; an inner member 55 including a hub wheel 53 and an inner ring 54, the hub wheel 53 being integrally formed with a wheel mounting flange 52 on its one end and an inner raceway surface 53a opposing to one of the double row outer raceway surfaces 51a, 51a on the outer circumference and having a cylindrical portion 53b axially extending from the inner raceway surface 53a, the inner ring 54 being press-fitted onto the cylindrical portion 53b of the hub wheel 53 and formed with an inner raceway surface 54a opposing to one of the double row outer raceway surfaces 51a, 51a on its outer circumference; and double row rolling elements 56, 56 rollably accommodated between the outer and inner raceway surfaces respectively of the outer member 51 and the inner member 55.

A generator 57 comprises multi-polar magnets 58 having circumferentially arranged magnetic poles and a magnetic ring 59 including coils opposed to the multi-polar magnets 58. The magnetic ring 59 is mounted on the knuckle 50 and the multi-polar magnets 58 are mounted on the inner member 55. Since the magnetic ring 59 of the generator 57 is mounted on the knuckle 50, it is possible to efficiently use a space between an outer joint member 61 of a constant velocity universal joint 60 and the knuckle 50 as a space for arranging the generator 57. Accordingly, it is possible to arrange the generator 57 at the end of the bearing having a less room without a problem of volume and obtain the freedom of design (see e.g. Patent Document 2 below).

### Documents of Prior Art

### Patent Documents

Patent Document 1: JP 2004-135471 A
Patent Document 2: JP 2003-287046A Patent Document 3: EP 1 719 656 A1

### Disclosure of the Invention

### Problems to be solved by the Invention

However, in such a wheel bearing apparatus of the prior art, it is a problem that the size of the stator and rotor forming the generator 57 and thus the generation power of the generator 57 is limited by the size of the outer diameter of the inner member 55.

It is therefore an object of the present invention to provide a wheel bearing apparatus with a generator which has a high degree of freedom of design, is able to keep a sufficient installation space for the generator, and is also able to increase the generation power due to size-up of magnetic field components.

### Means for solving the Problems

For achieving the object of the present invention, there is provided, according to the present invention of claim 1, a wheel bearing apparatus with a generator comprising an outer member formed on its outer circumference with a body mounting flange to be mounted on a body of a vehicle and on its inner circumference with double row outer raceway surfaces; an inner member including a hub wheel and at least one inner ring, the hub wheel being integrally formed with a wheel mounting flange on its one end and having an axially extending cylindrical portion, the inner ring being press-fitted onto the cylindrical portion of the hub wheel, the inner member being formed with double row inner raceway surfaces to be oppositely arranged to the double row outer raceway surfaces; double row rolling elements rollably accommodated between the outer and inner raceway surfaces respectively of the outer member and the inner member; and an outer joint member forming a constant velocity universal joint axially removably connected to the hub wheel characterized in that a stator forming part of a generator is mounted on an inner-side of the body mounting flange of the outer member, and that permanent magnets are mounted in a rotor case formed radially outward of a shoulder part of the outer joint member and arranged oppositely to the stator via an air gap.

Since the wheel bearing apparatus with a generator of claim 1 comprises an outer member formed on its outer circumference with a body mounting flange to be mounted on a body of a vehicle and on its inner circumference with double row outer raceway surfaces; an inner member including a hub wheel and at least one inner ring, the hub wheel being integrally formed with a wheel mounting flange on its one end and having an axially extending cylindrical portion, the inner ring being press-fitted onto the cylindrical portion of the hub wheel, the inner member being formed with double row inner raceway surfaces to be oppositely arranged to the double row outer raceway surfaces; double row rolling elements rollably accommodated between the outer and inner raceway surfaces respectively of the outer member and the inner member; and an outer joint member forming a constant velocity universal joint axially removably connected to the hub wheel and is characterized in that a stator forming part of a generator is mounted on an inner-side of the body mounting flange of the outer member, and that permanent magnets are mounted in a rotor case formed radially outward of a shoulder part of the outer joint member and arranged oppositely to the stator via an air gap, it is possible to reduce the size of a generator conventionally arranged in an engine compartment of a vehicle and thus to provide a room of space in the engine compartment and additionally to use a conventional power train. Furthermore, it is possible to provide a wheel bearing apparatus with a generator which can increase the generation power due to size-up of the magnetic field components.

It is preferable as defined in claim 2 that an axially extending annular projection is formed on an inner-side surface of the body mounting flange of the outer member, and the stator is accommodated within an annular space formed between the annular projection and an outer circumferential surface of the outer member. This makes it possible to replace a conventional wheel bearing apparatus with the wheel bearing apparatus of the present invention and also achieve increase of generation power due to size-up of magnetic field components.

It is preferable as defined in claim 3 that the generator is constituted as an axial-gap type generator in which a plurality of sectorial permanent magnets are circumferentially arranged within a flange-shaped rotor case formed radially outward of the shoulder of the outer joint member, and the permanent magnets are arranged oppositely to the stator via an axial air gap.

It is also preferable as defined in claim 4 that the generator is constituted as an radial-gap type generator in which a plurality of permanent magnets are circumferentially arranged within a cylindrical rotor case arranged radially outward of the shoulder part of the outer joint member and projected therefrom toward an outer-side, and the permanent magnets are arranged oppositely to the stator via an radial air gap.

It is preferable as defined in claim 5 that the stator is closed within the annular space by a stator cover mounted on an opening of the annular space, and a seal is mounted between the stator cover and the rotor case. This makes it possible to prevent foreign matter such as dusts or muddy water from entering into the bearing from outside thereof and improve the durability of the bearing.

It is also preferable as defined in claim 6 that the rotor case is formed integrally with the shoulder part of the outer joint member. This makes it possible to reduce the number of parts and steps of assembly.

It is also preferable as defined in claim 7 that the pitch circle diameter of the inner-side rolling elements of the double row rolling elements is larger than the pitch circle diameter of the outer-side rolling elements, and the size of each rolling element is same and the number of the inner-side rolling elements is larger than the number of the outer-side rolling elements. This makes it possible to increase the bearing rigidity of inner-side as compared with that of outer-side with effectively use the bearing space and extend the life of the bearing with increasing the load capacity of the bearing row.

### Effects of the Invention

Since the wheel bearing apparatus with a generator of the present invention comprises an outer member formed on its outer circumference with a body mounting flange to be mounted on a body of a vehicle and on its inner circumference with double row outer raceway surfaces; an inner member including a hub wheel and at least one inner ring, the hub wheel being integrally formed with a wheel mounting flange on its one end and having an axially extending cylindrical portion, the inner ring being press-fitted onto the cylindrical portion of the hub wheel, the inner member being formed with double row inner raceway surfaces to be oppositely arranged to the double row outer raceway surfaces; double row rolling elements rollably accommodated between the outer and inner raceway surfaces respectively of the outer member and the inner member; and an outer joint member forming a constant velocity universal joint axially removably connected to the hub wheel and is characterized in that a stator forming part of a generator is mounted on an inner-side of the body mounting flange of the outer member, and that permanent magnets are mounted in a rotor case formed radially outward of a shoulder part of the outer joint member and arranged oppositely to the stator via an air gap, it is possible to reduce the size of a generator conventionally arranged in an engine compartment of a vehicle and thus to provide a room of space in the engine compartment and additionally to use a conventional power train. Furthermore, it is possible to provide a wheel bearing apparatus with a generator which can increase the generation power due to size-up of the magnetic field components.

### Brief Description of the Drawings

[Fig. 1] A longitudinal section view showing a portion of suspension mechanism to which the wheel bearing apparatus with a generator of the present invention is applied;
[Fig. 2] A longitudinal section view showing a first embodiment of the wheel bearing apparatus with a generator of the present invention;
[Fig. 3(a)] A longitudinal section view showing a bearing part of the wheel bearing apparatus with a generator of Fig. 2;
[Fig. 3(b)] A plan view of the bearing part of Fig. 3(a) taken from the outer-side thereof;
[Fig. 3(c)] A plan view of the bearing part of Fig. 3(a) taken from the inner-side thereof;
[Fig. 4] An elevation view taken from a line IV-IV of Fig. 2;
[Fig. 5] A block diagram schematically showing electric parts used in the present invention;
[Fig. 6] A longitudinal section view showing a second embodiment of the wheel bearing apparatus with a generator of the present invention;
[Fig. 7] A block diagram showing contents of control during regeneration braking according to the prior art; and
[Fig. 8] A longitudinal section view showing a wheel bearing apparatus with a generator of the prior art.

### Preferable mode for carrying out the Invention

One preferable mode for carrying out the present invention is a wheel bearing apparatus with a generator comprising an outer member formed on its outer circumference with a body mounting flange to be mounted on a body of a vehicle and on its inner circumference with double row outer raceway surfaces; an inner member including a hub wheel and at least one inner ring, the hub wheel being integrally formed with a wheel mounting flange on its one end and an inner raceway surface opposing to one of the double row outer raceway surfaces and having an axially extending cylindrical portion, the inner ring being press-fitted onto the cylindrical portion of the hub wheel and being formed with an inner raceway surface opposing to the other of the double row outer raceway surfaces; double row rolling elements rollably accommodated between the outer and inner raceway surfaces respectively of the outer member and the inner member; and an outer joint member forming a constant velocity universal joint axially removably connected to the hub wheel characterized in that an axially extending annular projection is formed on an inner-side surface of the body mounting flange of the outer member and a stator is accommodated within an annular space formed between the annular projection and an outer circumferential surface of the outer member; and that permanent magnets are mounted in a rotor case extending radially outward from a shoulder part of the outer joint member and arranged oppositely to the stator via an axial air gap.

Preferred embodiments of the present invention will be hereinafter described with reference to the drawings.

### First Embodiments

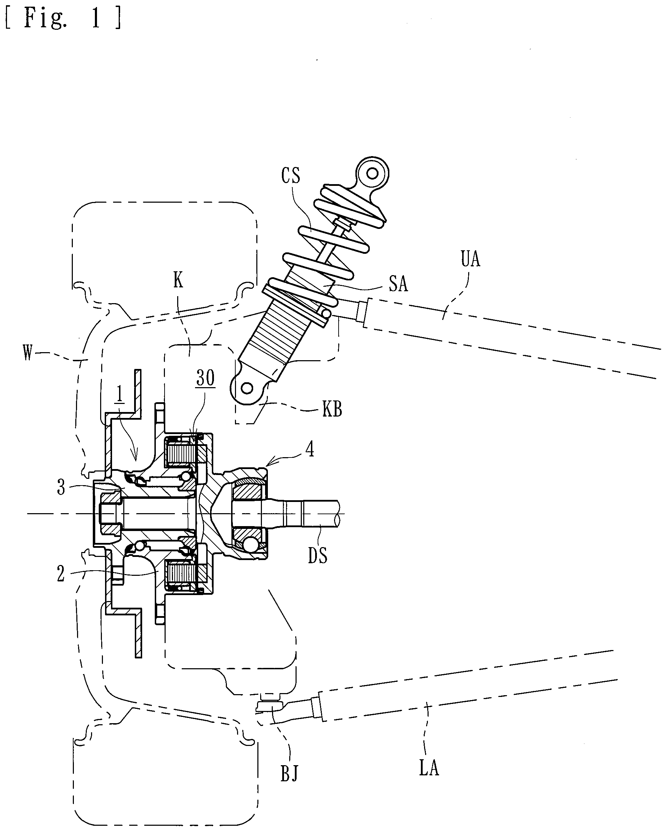

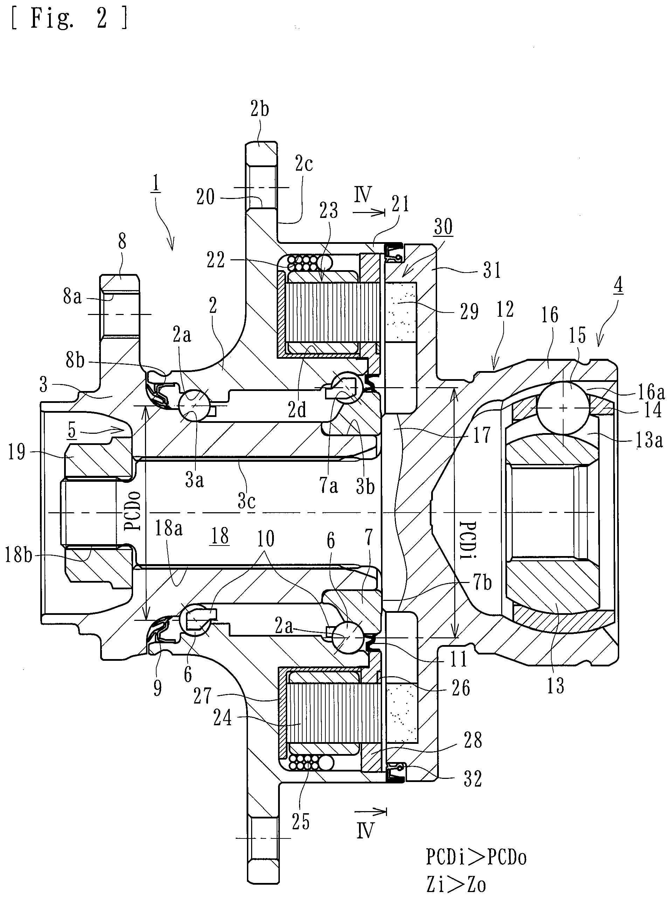

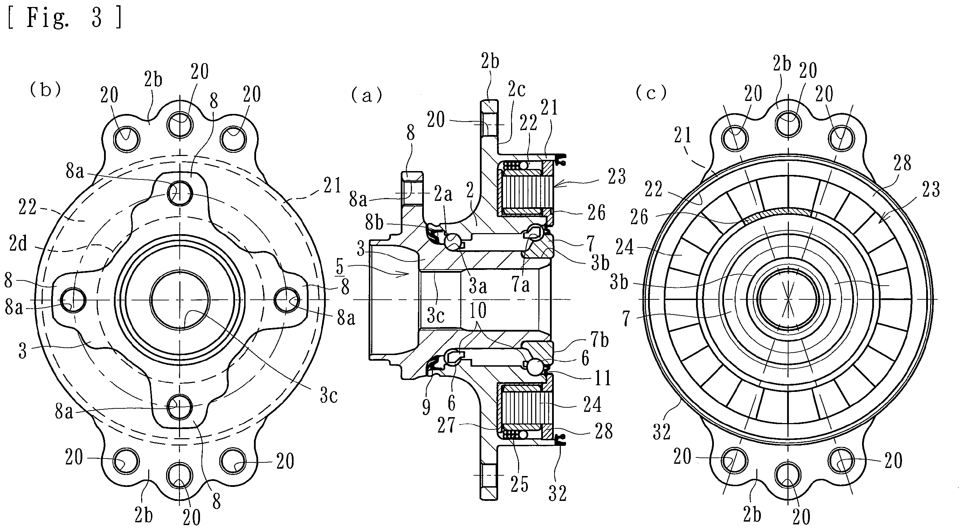

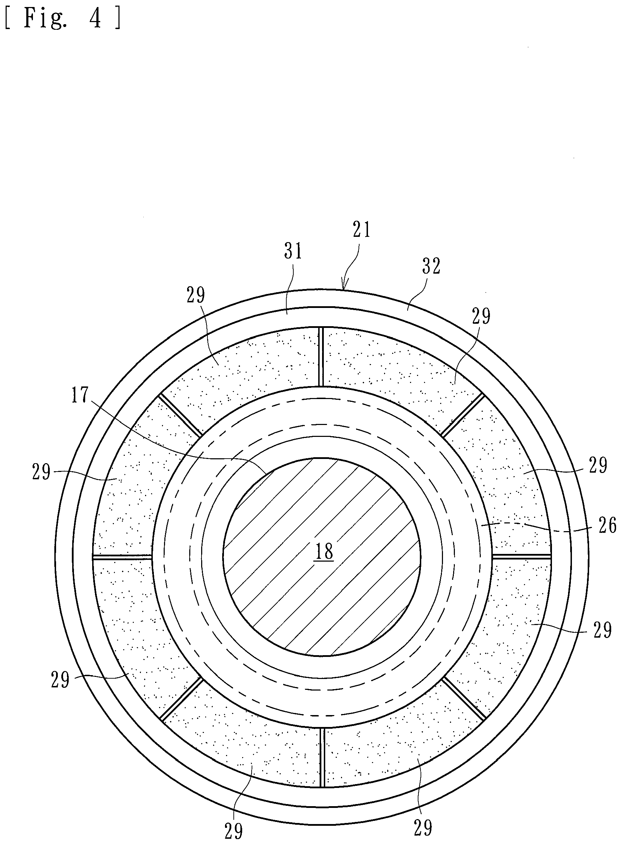

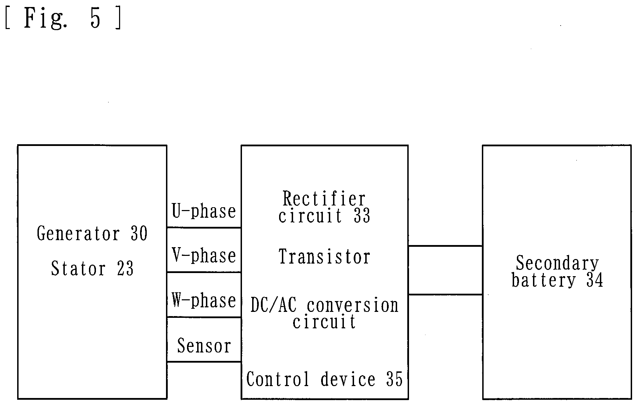

Fig. 1 is a longitudinal section view showing a portion of suspension mechanism to which the wheel bearing apparatus with a generator of the present invention is applied; Fig. 2 is a longitudinal section view showing a first embodiment of the wheel bearing apparatus with a generator of the present invention; Fig. 3(a) is a longitudinal section view showing a bearing part of the wheel bearing apparatus with a generator of Fig. 2; Fig. 3(b) is a plan view of the bearing part of Fig. 3(a) taken from the outer-side thereof; Fig. 3(c) is a plan view of the bearing part of Fig. 3(a) taken from the inner-side thereof; Fig. 4 is an elevation view taken from a line IV-IV of Fig. 2; and Fig. 5 is a block diagram schematically showing electric parts used in the present invention. In descriptions of the present invention, a term "outer-side" defines a side which is positioned outside of a vehicle body (left side in Fig. 1) and a term "inner-side" defines a side which is positioned inside of a vehicle body (right side in Fig. 1) when the wheel bearing apparatus is mounted on a vehicle body.

Fig. 1 shows part of a suspension apparatus to which a wheel bearing apparatus with a generator of the present invention is applied. There are two types in the suspension of a vehicle, i.e. an independent type suspension and a rigid axle type suspension. The independent type suspension is a type for supporting left and right wheels with left and right suspensions respectively and has superior drivability and ride comfort and is widely adopted as small-size front suspensions for general passenger cars or sports cars. There are various types in the independent type suspension such as strut type, double wishbone type, multi link type, leading type and tailing type etc, of which the strut type is widely adopted in suspensions of passenger cars.

A knuckle K is connected to a vehicle body via an upper arm UA for enabling upper and lower motions of the suspension and a lower arm LA for enabling turning of a wheel W. The lower arm LA is swingably connected to the knuckle K via a ball joint BJ mounted on the knuckle K. A shock absorber SA is arranged between the upper part of the upper arm UA and the vehicle body and a coil spring CS is arranged around the shock absorber SA coaxially therewith. The wheel W is turnably supported on the knuckle K connected to a knuckle bracket KB via a wheel bearing apparatus 1.

The wheel bearing apparatus 1 comprises an outer member 2 to be secured on the knuckle K and a hub wheel 3 supporting the wheel W and a rotational torque from an engine is transmitted to the hub wheel 3 by a constant velocity universal joint 4 via a drive shaft DS.

When a steering force is transmitted to the knuckle K via a steering mechanism (not shown), the knuckle K is rotated about a king pin axis (an axis connecting a supporting point of the upper arm UA and ball joint BJ of the lower arm LA) and thus the wheel W supported by the knuckle K is steered. The body weight is supported by the wheel W via the shock absorber SA and the knuckle K. Vibrations of wheel W caused during travel on an uneven road can be damped and also absorbed by the coil spring CS arranged coaxially with the shock absorber SA.

Fig. 2 shows the wheel bearing apparatus with a generator 1 of the present invention. This wheel bearing apparatus 1 is the third generation type for driving wheel and comprises an inner member 5, the outer member 2 and double row rolling elements (balls) 6, 6 rollably accommodated between the inner and outer members 5, 2 and is detachably connected to the constant velocity universal joint 4. The inner member 5 comprises the hub wheel 3 and an inner ring 7 press-fitted on the hub wheel 3.

The hub wheel 3 is integrally formed on its outer-side end with a wheel mounting flange 8 for mounting a wheel (not shown), one (outer-side) inner raceway surface 3a and a cylindrical portion 3b axially extending from the inner raceway surface 3a and also formed on its inner circumference with serration (or spline) 3c for torque transmission. The wheel mounting flange 8 is formed with bolt apertures 8a for securing hub bolts (not shown) equidistantly along its circumference.

The hub wheel 3 is formed of medium-high carbon steel such as S53C including carbon of 0.40∼0.80% by weight and is hardened by high frequency induction hardening as having a surface hardness of 58∼64 HRC over a region from an inboard-side base 8b of the wheel mounting flange 8 forming a seal land part on which an outer-side seal slides to the cylindrical portion 3b.

The inner ring 7 is formed with the other (inner-side) inner raceway surface 7a on its outer circumference and press-fitted on the cylindrical portion 3b of the hub wheel 3 via a predetermined interference and axially secured thereon. The inner ring 7 is formed of high carbon chrome steel such as SUJ2 and dipping hardened to its core as having hardness of 58∼64 HRC. The rolling elements 6 are also formed of high carbon chrome steel such as SUJ2 and dipping hardened to their cores as having hardness of 62∼67 HRC.

The outer member 2 is integrally formed on its outer circumference with a body mounting flange 2b to be mounted on the knuckle K and on its inner circumference with double row outer raceway surfaces 2a, 2a opposing to the inner raceway surfaces 3a, 7a of the inner member 5. Similarly to the hub wheel 3, the outer member 5 is formed of medium-high carbon steel such as S53C including carbon of 0.40∼0.80% by weight and at least the double row outer raceway surfaces 2a, 2a are hardened by high frequency induction hardening as having a surface hardness of 58∼64 HRC. The double row rolling elements 6, 6 are rollably accommodated and held by cages 10, 10 between the inner and outer raceway surfaces 3a, 7a; 2a, 2a. In addition, seals 9, 11 are mounted on annular openings formed between the outer member 2 and the inner member 5 for preventing leakage of grease sealed in the bearing and enter of rain water or dusts into the bearing.

In this embodiment, it is designed so that the pitch circle diameter PCDi of the inner-side rolling elements 6 of the double row rolling elements 6, 6 is larger than the pitch circle diameter PCDo of the outer-side rolling elements 6 (PCDi > PCDo). Due to difference of the pitch circle diameter PCDi, PCDo, the size of each rolling element 6 is same and the number Zi of the inner-side rolling elements 6 is larger than the number Zo of the outer-side rolling elements 6 (Zi > Zo). This makes it possible to increase the bearing rigidity of inner-side as compared with that of outer-side with effectively use the bearing space and extend the life of the bearing with increasing the load capacity of the bearing row.

Although it is shown here a wheel bearing apparatus formed by a double row angular contact ball bearing using balls as rolling elements 6, the present invention is not limited to such a bearing and may be a double row tapered roller bearing using tapered rollers as rolling elements. In addition, although it is shown here a wheel bearing apparatus of the third generation structure in which one inner raceway surface 3a is directly formed on the outer circumference of the hub wheel 3, it may be possible to apply the present invention to the second generation structure in which a pair of inner rings are press-fitted onto a cylindrical portion of a hub wheel.

The constant velocity universal joint 4 comprises the outer joint member 12, a joint inner ring 13, a cage 14 and torque transmitting balls 15. The outer joint member 12 is formed as an integrated member comprising a cup-shaped mouth part 16, a shoulder part 17 forming a bottom part of the mouth part 16, and a stem part 18 axially extending from the shoulder part 17. The stem part 18 is formed on its outer circumference with serration (or spline) 18a engaging the serration 3c of the hub wheel 3 and formed with an external thread 18b on the end of the serration 18a.

Axially extending curved track grooves 16a, 13a are formed respectively on an inner circumference of the mouth part 16 of the outer joint member 12 and on an outer circumference of the joint inner ring 13. In addition, the outer joint member 12 and the joint inner ring 13 are formed of medium-high carbon steel such as S53C including carbon of 0.40∼0.80% by weight and is hardened by high frequency induction hardening as having a surface hardness of 58∼64 HRC over regions including track grooves 16a, 13a and a region from the shoulder part 17 of the outer joint member 12 to a base of the stem part 18.

The hub wheel 3 and the outer joint member 12 are axially detachably connected by inserting the stem part 18 into the hub wheel 3 until the shoulder part 17 of the outer joint member 12 abuts against the larger end 7b of the inner ring 7 and then under such a condition by fastening the securing nut 19 on the external thread 18b with a predetermined fastening torque.

As shown in Fig. 3(b), the wheel mounting flange 8 of the hub wheel 3 is formed so that it has projections (four in the illustrated example) radially projected from the annular base part 8b by forming cut-out portions between the bolt apertures 8a so that each projection having same width as that of a region in which each bolt aperture 8a is formed. That is, the wheel mounting flange 8 is formed as a plural (four) partial flange. This enables weight reduction of the wheel bearing apparatus without reducing rigidity of the hub wheel 3. The shape of the wheel mounting flange 8 is not limited to such a partial flange and may be a cyclic petal shape formed by cutting curved recesses deeply cut to inside beyond a pitch circle diameter of the bolt apertures 8a between them.

A pair of the body mounting flanges 2b of the outer member 2 are secured on a bifurcated knuckle bracket KB connected respectively to the upper arm UA and the lower arm LA and arranged vertically relative to the ground. A plurality (three in the illustrated example) of bolt apertures 20 are formed in each body mounting flange 2b through which bolts to be fastened are passed.

As shown in Fig. 3(a), an axially extending annular projection 21 is formed on an inner-side surface 2c of the body mounting flange 2b of the outer member 2, and a stator 23 forming part of the generator 30 is accommodated within an annular space 22 formed between the annular projection 21 and an outer circumferential surface 2d (Fig. 2) of the outer member 2.

The stator 23 comprises a stator core 24 formed of laminated electromagnetic steel sheets, a coil 25 wound around the stator core 24, and a Hall element 26 shown in Fig. 3(c). A stator bracket 27 is mounted on the stator 23 so that it is positioned and secured on the outer member 2 during its assembly and a stator cover 28 is mounted on an opening of the annular space 22 formed by the projection 21 and the outer circumference 2d to close the stator 23 within the annular space 22. A winding method of the coil 25 may be either of the distribution winding or the concentrated winding.

On the other hand, permanent magnets 29 i.e. rotor magnetic field member forming the generator 30 are mounted on the constant velocity universal joint 4. More particularly, as shown in Fig. 2, the permanent magnets 29 are mounted within a flange-shaped rotor case 31 extending radially outward from the shoulder 17 of the outer joint member 12. As shown in Fig. 4, each permanent magnet 29 has a sectorial shape. The permanent magnets 29 are circumferentially arranged within a flange-shaped rotor case 31 and opposed to the stator core 24 as well as a plurality of magnets for the Hall elements 26 via an axial air gap. The rotor case may be constituted so that it can be press-fitted on the shoulder part 17 of the outer joint member 12 and detachable therefrom. However, it is preferable to form the rotor case 31 integrally with the outer joint member 12 to reduce both the number of parts and assembling steps.

Returning to Fig. 2 again, according to the present embodiment, the generator 30 is a permanent magnet type synchronous generator having an axial air gap in which the direction of magnetic line is parallel to the axis of generator. The permanent magnets 29 may be either ferrite base or rare earth element base. Since there is a gap in the axial air gap portion, a seal 32 is arranged on the outer circumference of the rotor case 31 to prevent dusts or muddy water from being entered from outside. The seal 32 is an oil seal with a garter spring.

As shown in Fig. 5, charge of electric power from the generator 30 to a secondary battery 34 such as lead battery, nickel hydrogen battery, lithium ion battery etc. and discharge from the secondary battery 34 to the generator 30 are performed under control by a control device 35. A 3-phase electric power outputted from the generator 30 is converted to a DC power by the control device 35. In this case, the advance/delay angle control for controlling the generation power of the generator 30 is performed to improve the charge of battery 34.

Voltages induced in U-phase and W-phase of the stator coil 25 are converted to DC voltages by a rectifier circuit 33 of and applied to condensers. In addition, voltage control for voltage drop and rise is also appropriately performed. In addition, the control device 35 monitors charge amount of the battery and converts traveling energy to electric power within a range not exceeding the battery capacity. When the battery capacity has reached a rated value, the control device 35 prevents overcharge of battery with losing electric power through a resistor.

According to the wheel bearing apparatus with a generator 1, it is possible to reduce the size of a generator conventionally arranged in an engine compartment of a vehicle and thus to provide a room of space in the engine compartment and additionally to use a conventional power train. Furthermore, it is possible to provide a wheel bearing apparatus with a generator which can increase the generation power due to size-up of the magnetic field components. In addition, since the stator 23 is able to be previously assembled to the outer member 2 as a sub-assembly in the previous manufacturing step, it is possible to simplify the assembling steps.

### Second Embodiment

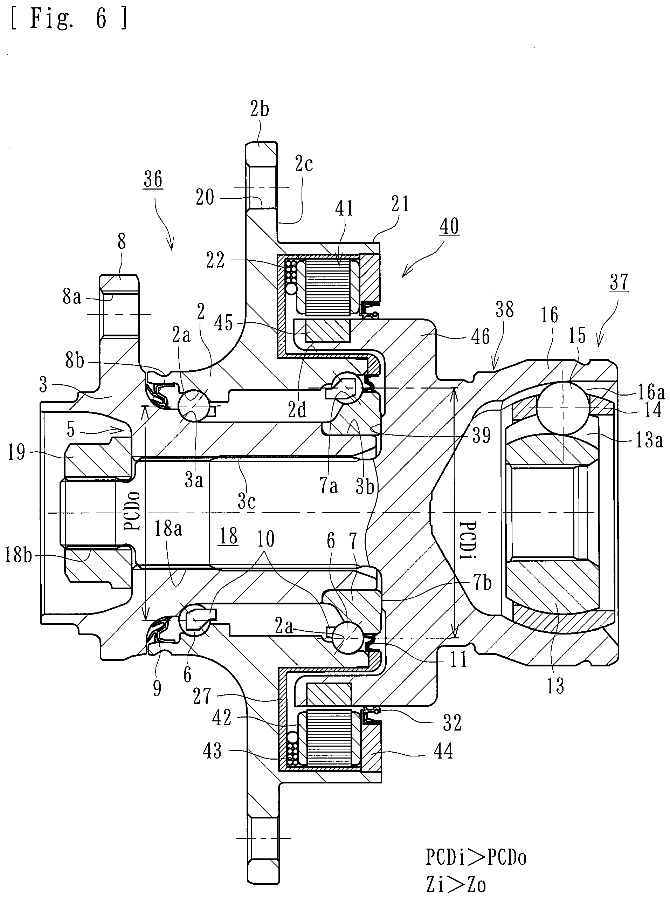

Fig. 6 is a longitudinal section view showing a second embodiment of the wheel bearing apparatus with a generator of the present invention. This second embodiment is basically different only in the structure of the generator and accordingly same reference numerals are also used in this embodiment as those used for designating same parts of the first embodiment.

A wheel bearing apparatus with a generator 36 shown in Fig. 6 is the third generation type for driving wheel and comprises the inner member 5, the outer member 2 and double row rolling elements (balls) 6, 6 rollably accommodated between the inner and outer members 5, 2 and is detachably connected to the constant velocity universal joint 37. The inner member 5 comprises the hub wheel 3 and the inner ring 7 press-fitted on the hub wheel 3.

The constant velocity universal joint 37 comprises the outer joint member 38, the joint inner ring 13, the cage 14 and the torque transmitting balls 15. The outer joint member 38 is formed as an integrated member comprising the cup-shaped mouth part 16, a shoulder part 39 forming a bottom part of the mouth part 16, and the stem part 18 axially extending from the shoulder part 39.

The outer joint member 38 is formed of medium-high carbon steel such as S53C including carbon of 0.40∼0.80% by weight and is hardened by high frequency induction hardening as having a surface hardness of 58∼64 HRC over regions including track grooves 16a, 13a and a region from the shoulder part 39 of the outer joint member 38 to a base of the stem part 18.

In this embodiment, it is also formed the axially extending annular projection 21 formed on the inner-side surface 2c of the body mounting flange 2b of the outer member 2. A stator 41 forming part of the generator 40 is accommodated within the annular space 22 formed between the annular projection 21 and the cylindrical outer circumferential surface 2d of the outer member 2.

The stator 41 comprises a stator core 42 formed of laminated electromagnetic steel sheets, a coil 43 wound around the stator core 42. A stator bracket 27 is mounted on the stator 41 so that it is positioned and secured on the outer member 2 during its assembly and a stator cover 44 is mounted on an opening of the annular space 22 formed by the projection 21 and the outer circumference 2d to close the stator 41 within the annular space 22.

On the other hand, permanent magnets 45 i.e. rotor magnetic field member forming the generator 40 are mounted on the outer circumference of a cylindrical rotor case 46 extending radially outward from the shoulder 39 of the outer joint member 38 and projecting toward the outer-side into the annular space 22 and opposed to the stator core 42 via a predetermined radial air gap.

According to this embodiment, the generator is a permanent magnet type synchronous generator of a radial air gap type in which the direction of magnetic line intersects the axis of the generator at a right angle. Since there is a gap in the radial air gap portion, the seal 32 is arranged on the inner circumference of the stator cover 44 to prevent dusts or muddy water from being entered from outside.

Similarly to the first embodiment, it is also possible in the second embodiment to downsize the generator 40 as well as to provide a room of space in the engine compartment. In addition, it is possible to use a conventional power train and to replace the wheel bearing apparatus of the present invention with that of the prior art and also to increase the generation power due to size-up of the magnetic field components.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The wheel bearing apparatus with a generator can be applied to wheel bearing apparatus of the second or third generation type in which a stator and a rotor forming a generator is combined and the wheel bearing apparatus comprises an inner member forming a rotary member and an outer member forming a stator member.

### Explanation of Reference numerals and Characters

- 1, 36: wheel bearing apparatus
- 2: outer member
- 2a: outer raceway surface
- 2b: body mounting flange
- 2c: inner-side surface of outer member
- 2d: outer circumference of outer member
- 3: hub wheel
- 3a, 7a: inner raceway surface
- 3b: cylindrical portion
- 3c, 18a: serration
- 4, 37: constant velocity universal joint
- 5: inner member
- 6: rolling element
- 7: inner ring
- 7b: larger end face of inner ring
- 8: wheel mounting flange
- 8a: bolt aperture
- 8b: inner-side base
- 9, 11, 32: seal
- 10: cage
- 12, 38: outer joint member
- 13: joint inner ring
- 13a, 16a: track groove
- 14: cage
- 15: torque transmitting ball
- 16: mouth part
- 17, 39: shoulder part
- 18: stem part
- 18b: external thread
- 19: securing nut
- 20: bolt aperture
- 21: projection
- 22: annular space
- 23, 41: stator
- 24, 42: stator core
- 25, 43: coil
- 26: Hall element
- 27: stator bracket
- 28, 44: stator cover
- 29, 45: permanent magnet
- 30, 40: generator
- 31, 46: rotor case
- 33: rectifier circuit
- 34: secondary battery
- 35: control device
- 50: knuckle
- 51: outer member
- 51a: outer raceway surface
- 52: wheel mounting flange
- 53: hub wheel
- 53a, 54a: inner raceway surface
- 53b: cylindrical portion
- 54: inner ring
- 55: inner member
- 56: ball
- 57: generator
- 58: multi-polar magnet
- 59: magnetic ring
- 60: constant velocity universal joint
- 61: outer joint member
- BJ: ball joint
- CS: coil spring
- DS: drive shaft
- K: knuckle
- KB: knuckle blacket
- LA: lower arm
- PCDi: pitch circle diameter of inner-side rolling element
- PCDo: pitch circle diameter of outer-side rolling element
- SA: shock absorber
- UA: upper arm
- W: wheel
- Zi: number of inner-side rolling element
- Zo: number of outer-side rolling element

## Claims

1. A wheel bearing apparatus with a generator (1 or 36) comprising:
- an outer member (2) formed on its outer circumference with a body mounting flange (2b) to be mounted on a body of a vehicle and on its inner circumference with double row outer raceway surfaces (2a, 2a);
- an inner member (5) including a hub wheel (3) and at least one inner ring (7), the hub wheel (3) being integrally formed with a wheel mounting flange (8) on its one end and having an axially extending cylindrical portion (3b), the inner ring (7) being press-fitted onto the cylindrical portion (3b) of the hub wheel (3), the inner member (5) being formed with double row inner raceway surfaces (3a, 7a) to be oppositely arranged to the double row outer raceway surfaces (2a, 2a);
- double row rolling elements (6, 6) rollably accommodated between the outer and inner raceway surfaces (2a, 2a; 3a, 7a) respectively of the outer member (2) and the inner member (5);
- an outer joint member (12 or 38) axially removably connected to the hub wheel (3); and
- a stator (23 or 41) forming part of a generator (30 or 40) is mounted to the body mounting flange (2b) of the outer member (2), and that permanent magnets (29 or 45) are mounted in a rotor case (31 or 46) formed radially outward of a shoulder part (17 or 39) of the outer joint member (12 or 38) and arranged oppositely to the stator (23 or 41) via an air gap; **characterized in that**:
- the outer joint member (12 or 38) forms a constant velocity universal joint (4 or 37); and
- the stator (23 or 41) is mounted on an inner side of the body mounting flange (2b).

2. A wheel bearing apparatus with a generator (1 or 36) of claim 1 wherein an axially extending annular projection (21) is formed on an inner-side surface (2c) of the body mounting flange (2b) of the outer member (2), and the stator (23 or 41) is accommodated within an annular space (22) formed between the annular projection (21) and an outer circumferential surface (2d) of the outer member (2).

3. A wheel bearing apparatus with a generator (1) of claim 1 wherein the generator (30) is constituted as an axial-gap type generator in which a plurality of sectorial permanent magnets (29) are circumferentially arranged within a flange-shaped rotor case (31) formed radially outward of the shoulder (17) of the outer joint member (12), and the permanent magnets (29) are arranged oppositely to the stator (23) via an axial air gap.

4. A wheel bearing apparatus with a generator (36) of claim 1 wherein the generator (40) is constituted as an radial-gap type generator in which a plurality of permanent magnets (45) are circumferentially arranged within a cylindrical rotor case (46) arranged radially outward of the shoulder part (39) of the outer joint member (38) and projected therefrom toward an outer-side, and the permanent magnets (45) are arranged oppositely to the stator (41) via an radial air gap.

5. A wheel bearing apparatus with a generator (1) of claim 2 wherein the stator (23) is closed within the annular space (22) by a stator cover (28) mounted on an opening of the annular space (22), and a seal (32) is mounted between the stator cover (28) and the rotor case (31).

6. A wheel bearing apparatus with a generator (1) of claim 1 wherein the rotor case (31) is formed integrally with the shoulder part (17) of the outer joint member (12).

7. A wheel bearing apparatus with a generator (1) of claim 1 wherein the pitch circle diameter (PCDi) of the inner-side rolling elements (6) of the double row rolling elements (6, 6) is larger than the pitch circle diameter (PCDo) of the outer-side rolling elements (6), and the size of each rolling element (6) is same and the number (Zi) of the inner-side rolling elements (6) is larger than the number (Zo) of the outer-side rolling elements (6).

## Patentansprüche

1. Radlagervorrichtung mit einem Generator (1 oder 36), umfassend:
- ein äußeres Element (2), das auf seinem Außenumfang mit einem Karosseriebefestigungsflansch (2b), der an einer Karosserie eines Fahrzeugs zu befestigen ist, und auf seinem Innenumfang mit zweireihigen äußeren Laufbahnflächen (2a, 2a) ausgebildet ist;
- ein inneres Element (5), das eine Radnabe(3) und mindestens einen Innenring (7) umfasst, wobei die Radnabe (3) an Ihrem einen Ende in einem Stück mit einem Radbefestigungsflansch (8) ausgebildet ist und einen sich axial erstreckenden zylindrischen Abschnitt (3b) aufweist, wobei der Innenring (7) auf den zylindrischen Abschnitt (3b) der Radnabe (3) pressgepasst ist, und das innere Element (5) mit zweireihigen inneren Laufbahnflächen (3a, 7a) ausgebildet ist, die gegenüber den zweireihigen äußeren Laufbahnflächen (2a, 2a) anzuordnen sind;
- zweireihige Wälzkörper (6, 6), die zwischen den äußeren bzw. den inneren Laufbahnflächen (2a, 2a; 3a, 7a) des äußeren Elements (2) und des inneren Elements (5) rollbar untergebracht sind;
- ein Außengelenkelement (12 oder 38), das axial abnehmbar mit der Radnabe (3) verbunden ist; und
- einen Stator (23 oder 41), der Teil eines Generators (30 oder 40) ist und am Karosseriebefestigungsflansch (2b) des äußeren Elements (2) befestigt ist, wobei Dauermagneten (29 oder 45) in einem Rotorgehäuse (31 oder 46) befestigt sind, das radial außerhalb eines Schulterteils (17 oder 39) des Außengelenkelements (12 oder 38) ausgebildet und über einen Luftspalt gegenüber dem Stator (23 oder 41) angeordnet ist; **dadurch gekennzeichnet, dass**:
- das Außengelenkelement (12 oder 38) ein Gleichlaufgelenk (4 oder 37) bildet; und
- der Stator (23 oder 41) auf einer Innenseite des Karosseriebefestigungsflansches (2b) befestigt ist.

2. Radlagervorrichtung mit einem Generator (1 oder 36) nach Anspruch 1, wobei ein sich axial erstreckender ringförmiger Vorsprung (21) auf einer Innenseitenfläche (2c) des Karosseriebefestigungsflansches (2b) des äußeren Elements (2) ausgebildet ist, und der Stator (23 oder 41) innerhalb eines ringförmigen Raums (22) untergebracht ist, der zwischen dem ringförmigen Vorsprung (21) und einer Außenumfangsfläche (2d) des äußeren Elements (2) ausgebildet ist.

3. Radlagervorrichtung mit einem Generator (1) nach Anspruch 1, wobei der Generator (30) als ein Axialspalt-Generator ausgebildet ist, in welchem eine Vielzahl von sektoriellen Dauermagneten (29) umfänglich innerhalb eines flanschförmigen Rotorgehäuses (31) angeordnet ist, das radial außerhalb der Schulter (17) des Außengelenkelements (12) ausgebildet ist, und die Dauermagneten (29) über einen axialen Luftspalt gegenüber dem Stator (23) angeordnet sind.

4. Radlagervorrichtung mit einem Generator (36) nach Anspruch 1, wobei der Generator (40) als ein Radialspalt-Generator ausgebildet ist, in welchem eine Vielzahl von Dauermagneten (45) umfänglich innerhalb eines zylindrischen Rotorgehäuses (46) angeordnet ist, das radial außerhalb des Schulterteils (39) des Außengelenkelements (38) ausgebildet ist und davon nach einer Außenseite vorsteht, und die Dauermagneten (45) über einen radialen Luftspalt gegenüber dem Stator (41) angeordnet sind.

5. Radlagervorrichtung mit einem Generator (1) nach Anspruch 2, wobei der Stator (23) durch eine Statorabdeckung (28), die auf einer Öffnung des ringförmigen Raums (22) befestigt ist, innerhalb des ringförmigen Raums (22) eingeschlossen ist, und eine Dichtung (32) zwischen der Statorabdeckung (28) und dem Rotorgehäuse (31) befestigt ist.

6. Radlagervorrichtung mit einem Generator (1) nach Anspruch 1, wobei das Rotorgehäuse (31) in einem Stück mit dem Schulterteil (17) des Außengelenkelements (12) ausgebildet ist.

7. Radlagervorrichtung mit einem Generator (1) nach Anspruch 1, wobei der Lochkreisdurchmesser (PCDi) der innenseitigen Wälzkörper (6) der zweireihigen Wälzkörper (6, 6) größer als der Lochkreisdurchmesser (PCDo) der außenseitigen Wälzkörper (6) ist, und die Größe jedes Rollelements (6) gleich ist, und die Anzahl (Zi) der innenseitigen Wälzkörper (6) größer als die Anzahl (Zo) der außenseitigen Wälzkörper (6) ist.

## Revendications

1. Appareil de roulement de roue avec générateur (1 ou 36) comprenant :
- un élément externe (2) formé sur sa circonférence externe avec une bride de montage de corps (2b) à monter sur un corps d'un véhicule et sur sa circonférence interne avec des surfaces de circuit externe en double rangée (2a, 2a) ;
- un élément interne (5) comprenant une roue de moyeu (3) et au moins un anneau interne (7), la roue de moyeu (3) étant formée de manière intégrée avec une bride de montage de roue (8) sur sa une extrémité et ayant une section cylindrique s'étendant axialement (3b), l'anneau interne (7) étant ajusté par pression sur la section cylindrique (3b) de la roue de moyeu (3), l'élément interne (5) étant formé avec des surfaces de circuit interne en double rangée (3a, 7a) pour être disposé de manière opposée aux surfaces de circuit externe à double rangée (2a, 2a) ;
- des éléments de roulement à double rangée (6, 6) logés de manière roulable entre les surfaces de circuit externe et interne (2a, 2a ; 3a, 7a) respectivement de l'élément externe (2) et de l'élément interne (5) ;
- un élément d'articulation externe (12 ou 38)
connecté de manière enlevable axialement à la roue de moyeu (3) ; et
- un stator (23 ou 41) formant une partie d'un générateur (30 ou 40) est monté à la bride de montage de corps (2b) de l'élément externe (2), et que des aimants permanents (29 ou 45) sont montés dans un boîtier de rotor (31 ou 46) formé radialement vers l'extérieur d'une partie d'épaulement (17 ou 39) de l'élément d'articulation externe (12 ou 38) et disposé de manière opposée au stator (23 ou 41) via un trou d'air ; **caractérisé en ce que** :
- l'élément d'articulation externe (12 ou 38) forme une articulation universelle à vitesse constante (4 ou 37) ; et
- le stator (23 ou 41) est monté sur un côté interne de la bride de montage de corps (2b).

2. Appareil de roulement de roue avec générateur (1 ou 36) avec lequel une projection annulaire s'étendant axialement (21) est formée sur une surface de côté interne (2c) de la bride de montage de corps (2b) de l'élément externe (2), et le stator (23 ou 41) est logé dans un espace annulaire (22) formé entre la projection annulaire (21) et une surface circonférentielle externe (2d) de l'élément externe (2).

3. Appareil de roulement de roue avec générateur (1) selon la revendication 1 avec lequel le générateur (30) est constitué comme un générateur de type à espace libre axial dans lequel une pluralité d'aimants permanents sectoriels (29) sont disposés de manière circonférentielle dans un boîtier de rotor en forme de bride (31) formé radialement à l'extérieur de l'épaulement (17) de l'élément d'articulation externe (12) et les aimants permanents (29) sont disposés de manière opposée au stator (23) via un trou d'air axial.

4. Appareil de roulement de roue avec générateur (36) selon la revendication 1 avec lequel le générateur (40) est constitué comme un générateur de type à espace libre axial dans lequel une pluralité d'aimants permanents (45) sont disposés de manière circonférentielle dans un boîtier de rotor cylindrique (46) disposé radialement à l'extérieur de la partie d'épaulement (39) de l'élément d'articulation externe (38) et projetés à partir de celui-ci vers un coté externe, et les aimants permanents (45) sont disposés de manière opposée au stator (41) via un trou d'air radial.

5. Appareil de roulement de roue avec générateur (1) selon la revendication 2 avec lequel le stator (23) est fermé dans l'espace annulaire (22) par un couvercle de stator (28) monté sur une ouverture de l'espace annulaire (22) et un scellement (32) est monté entre le couvercle de stator (28) et le boîtier de rotor (31).

6. Appareil de roulement de roue avec générateur (1) selon la revendication 1 avec lequel le boîtier de rotor (31) est formé de manière intégrée avec la partie d'épaulement (17) de l'élément d'articulation externe (12).

7. Appareil de roulement de roue avec générateur (1) selon la revendication 1 avec lequel le diamètre de cercle de lanceur (PCDi) des éléments de roulement de côté interne (6) des éléments de roulement à double rangée (6, 6) est plus grand que le diamètre de cercle de lanceur (PCDo) des éléments de roulements de côté externe (6) et la taille de chaque élément de roulement (6) est la même et le nombre (Zi) des éléments de roulement de côté interne (6) est plus grand que le nombre (Zo) d'éléments de roulement de côté externe (6).
